# EUROPEAN PATENT SPECIFICATION

(11) **EP 2 500 218 B1**
(45) Date of publication and mention of the grant of the patent: **23.04.2014**
(21) Application number: 10829816.7
(22) Date of filing: 20.10.2010
(51) Int. Cl.: B60R 25/10, B60R 1/00, B60R 11/02, E05B 49/00

(54) **MULTI-FUNCTION CAMERA SYSTEM**
MULTIFUNKTIONS-KAMERASYSTEM
SYSTÈME DE CAMÉRA MULTIFONCTIONS

(30) Priority: 13.11.2009 JP 2009259767
(43) Date of publication of application: 19.09.2012
(73) Proprietor: Aisin Seiki Kabushiki Kaisha, Aichi 448-8650 (JP)
(72) Inventor: ISHIGURO, Hiroshi, Kariya-shi Aichi 4488650 (JP); MURAKAMI, Yuichi, Kariya-shi Aichi 448-8650 (JP); HIROTA, Koichi, Kariya-shi Aichi 448-8650 (JP)
(74) Representative: TBK
(86) International application number: PCT/JP2010/068507
(87) International publication number: WO 2011/058856

(56) References cited:
- EP-A2- 1 375 267
- DE-A1-102004 049 054
- DE-A1-102005 014 581
- JP-A- 2003 301 639
- JP-A- 2006 117 198
- JP-A- 2008 195 268
- JP-A- 2008 207 627
- US-A1- 2002 152 010
- US-B1- 6 323 761

## Description

### TECHNICAL FIELD

The present invention relates to a multi-function camera system for applying an onboard camera to multiple uses.

### RELATED ART

Owing to the spread of image pickup devices such as a CCD (charge-coupled device) and a CIS (CMOS image sensor), an increasing number of cases provide a vehicle with an onboard camera. Japanese Unexamined Patent Application Publication No. 2006-168553 (Patent Document 1) discloses an authentication system for photographing the face of a person standing in the outside of a driver's side door of a vehicle from the inside of the vehicle to authenticate the person's face biometrically. Japanese Unexamined Patent Application Publication No. 2007-153193 (Patent Document 2) discloses technique for detecting whether or not an obstacle is present in the vicinity of a vehicle when a front door is opened or whether or not an obstacle is approaching from behind the vehicle based on an image captured by a camera mounted on a side view mirror. Further, Japanese Unexamined Patent Application Publication No. 2005-88759 (Patent Document 3) and Japanese Unexamined Patent Application Publication No. 2006-182234 (Patent Document 4) both disclose technique for putting a camera mounted on a door mirror to various uses depending on a scene. In Patent Document 3, the camera is used for checking a side of a vehicle when the vehicle is pulled over to the side of the road and for photographing the face of the user. In this, the camera is designed to photograph an area below the door mirror when the vehicle is traveling and to change the direction of the camera to photograph the interior of the vehicle when the vehicle is stopped and the door mirror is folded. The camera disclosed in Patent Document 4 is designed to function as a side blind-spot camera for photographing a scene in a forward side area of a vehicle that falls in the driver's blind spot when the vehicle is used and to function as a surveillance camera for the interior of the vehicle by being rotated by 180 degrees within a housing of the door mirror for photographing the interior of the vehicle when the vehicle is not used.

Document DE 102005014581 A1 comprises an obstacles warning method for vehicle occupants, which involves detecting an intention to open a door from a signal of a proximity sensor, which detects approaching of a hand to a vehicle door-inner handle before contacting of the handle.

### CONVENTIONAL ART DOCUMENT

### Patent Document

Patent Document 1: Japanese Unexamined Patent Application Publication No. 2006-168553 (see paragraphs 23 and 31 to 33)
Patent Document 2: Japanese Unexamined Patent Application Publication No. 2007-153193 (see paragraphs 9 and 15)
Patent Document 3: Japanese Unexamined Patent Application Publication No. 2005-88759 (see paragraphs 21, 24 to 28)
Patent Document 4: Japanese Unexamined Patent Application Publication No. 2006-182234 (see paragraphs 11 to 14 and 17)

### SUMMARY OF INVENTION

### Technical Problem

It is expected that various functions are provided in the vehicle by using the camera. Meanwhile, in order to provide various functions, a number of cameras are required to be provided. The provision of numerous cameras would boost the manufacturing cost and additionally may reduce a fuel consumption rate and deteriorate motion performance due to increase of the weight of the vehicle. Thus, it is preferable to allow as few cameras as possible to achieve as many functions as possible. The cameras disclosed in Patent Document 3 and Patent Document 4 noted above are put to the two uses, which provide a preferable mode in terms of reducing the number of cameras. On the other hand, it is necessary to change the photographing direction of the camera because a single camera is used for multiple purposes, which requires an additional mechanism for changing the photographing direction. As a result, even if the number of camera is reduced, the cost for providing such an additional mechanism is incurred, and further the weight of the vehicle is likely to increase because of the additional mechanism.

Thus, the technique is required to apply an onboard camera to multiple uses with low cost without providing any mechanism that might increase the weight of the vehicle.

### Solution to Problem

A characteristic feature of a multi-function camera system according to the present invention lies in comprising a camera mountable to a vehicle component on a side of a vehicle for photographing a side area of the vehicle; characterized by a condition determination unit for determining execution conditions of a plurality of function units; an obstacle detection unit acting as one of the function units to function based on a determination result from the condition determination unit for detecting, through image recognition, an obstacle present in the vicinity of the vehicle or approaching the vehicle based on a captured image of the camera; and an individual authentication unit acting as one of the function units to function based on the determination result from the condition determination unit for ascertaining, through the image recognition, whether or not a person having reached the vehicle matches with a user who has been registered at the vehicle beforehand based on the captured image of the camera.

The above-noted arrangement can dispense with any additional mechanism for changing the photographing direction of the camera since the camera is fixed to the vehicle component. This saves the cost for providing the additional mechanism and prevents the weight of the vehicle from being increased. While the multi-function camera system has the plurality of function units including the obstacle detection unit and the individual authentication unit, each of the function units is not designed to perform its function all the time, but configured to perform the function as necessary based on the determination result on the execution condition from the condition determination unit. Hence, a calculating burden is not increased even if the plurality of function units are provided, which can provide the multi-function camera system with low cost without using any high-performance calculating device. Naturally, this system would not hinder the plurality of function units from simultaneously performing their functions depending on the execution conditions.

It is preferable that the condition determination unit of the multi-function camera system of the present invention determines that the execution condition for the obstacle detection unit is established when the vehicle is traveling including making a short stop, or stopped and unlocked, and determines that the execution condition for the individual authentication unit is established when the vehicle is not traveling but stopped and locked. With such an arrangement, it is possible to allow each function unit to effectively perform its function based on the proper execution condition corresponding to the state of the vehicle.

Further, it is preferable that the multi-function camera system of the present invention comprises a blind-spot monitor unit acting as one of the function units to function based on the determination result from the condition determination unit for outputting an image captured by the camera including a scene falling in the driver's blind spot to a display unit provided in the interior of the vehicle, and that the condition determination unit determines that the execution condition for the blind-spot monitor unit is established when the user of the vehicle including the driver gives an instruction to display the captured image, or when the obstacle is detected by the obstacle detection unit. With such an arrangement, even if the multi-function camera system includes further function units, each of the function units may perform its function properly based on the determination result from the condition determination unit on the execution condition corresponding to the state of the vehicle. Further, increase in calculating burden is restrained even if the blind-spot monitor unit with great usefulness is provided, as a result of which the multi-function camera system may be designed with low cost without using any high-performance calculating device. Naturally, the blind-spot monitor unit and any other function unit may be simultaneously in action in response to the execution condition.

Further, in the multi-function camera system of the present invention, it is preferable that the condition determination unit determines a preferential condition as to which of image recognition of a forward side area of the vehicle and image recognition of a rearward side area of the vehicle should be preferentially performed, and that the obstacle detection unit preferentially performs the image recognition of either of the forward side area and the rearward side area based on the determination result from the condition determination unit. When the onboard camera is applied to multiple uses, such a camera should preferably be a wide-angle camera that includes the driver's blind spot in the shooting range. An image to be captured by the wide-angle camera naturally targets a wide range area. Thus, it is more effective in terms of time and calculating burden to perform the image recognition in a limited region than to perform the image recognition over the entire captured image to detect an obstacle. With the above-noted arrangement, since it is determined which of the forward side area and rearward side area should have priority in performing the image recognition, the obstacle detection may be effectively performed.

Further, when the vehicle includes a swingable door pivotable about an axis defined forwardly of the vehicle, it is preferable that the condition determination unit of the multi-function camera system of the present invention determines the preferential condition depending on an opening degree of the swingable door to give priority to the image recognition of the forward side area when the opening degree of the swingable door is less than a predetermined opening degree and give priority to the image recognition of the rearward side area when the opening degree of the swingable door is or greater than the predetermined opening degree. When the swingable door that is pivotable about the axis defined forwardly of the vehicle is open, an end portion of the door is moved forwardly. If the image recognition of the forward side area is given priority when the opening degree of the swingable door is less than the predetermined opening degree such as when the door is started to open, an obstacle that might come into contact with the end portion of the door is highly likely to be detected reliably and quickly. Since such an obstacle may be present at a lower position such as a curb and fall in the user's blind spot, it is preferably detected through the image recognition. On the other hand, when the door is opened to the predetermined opening degree or greater, it is necessary to prevent the moving object (obstacle) that approaches from behind the vehicle and is about to pass through the side area of the vehicle from coming into contact with the swingable door that projects laterally of the vehicle. Since the user faces the front and thus is less aware of the moving object approaching from behind of the vehicle than the moving object approaching from ahead of the vehicle, it is preferable that the approach of the moving object is detected by the image recognition.

Further, it is preferable that the multi-function camera system of the present invention comprises an opening degree calculating unit for calculating the opening degree of the swingable door based on the captured image of the camera, that the camera is mounted on the swingable door or on the vehicle component provided in the swingable door. With such an arrangement, the camera moves along with the swingable door. On the other hand, since the vehicle is still, the positions of part of the vehicle and the vehicle components other than the swingable door are moved (changed) in the captured image. The opening degree of the swingable door can be calculated based on the amount of movement (variance) of those positions. Thus, it becomes possible to obtain the opening degree of the swingable door with high accuracy without providing any separate sensor in the swingable door.

Further, it is preferable that the camera, condition determination unit and plurality of function units of the multi-function camera unit of the present invention are configured to function when a main power supply of the vehicle is active, and the multi-function camera system further comprises a power supply control system configured to function regardless whether or not the main power supply of the vehicle is active and to allow at least one of the camera, condition determination unit and plurality of function units to function in response to an operation relative to a door of the vehicle even if the main power supply of the vehicle is not active. The multi-function camera system has a function unit that is desired to function when the main power supply of the vehicle is not activated such as when the user rides on the parked vehicle, or when the main power supply is cut off such as when the user parks the vehicle to get off, for example. However, if electric power is constantly supplied to all of the function units even when the vehicle is parked, the battery of the vehicle is unfavorably consumed. With the above-noted arrangement, the power supply control unit of the vehicle is functioned when the main power supply is not activated to supply electric power to any proper function unit in response to the operation relative to the door of the vehicle. As a result, energy-saving and highly convenient multi-function camera system may be provided.

Here, the operation relative to the door of the vehicle may be a condition in which the person having reached the vehicle touches a door handle provided in the outside of the vehicle. Further, it may be a condition in which the user including the driver of the vehicle touches a door handle provided in the interior of the vehicle. The detection of the touch on the door handle leads to more quick detection of the operation relative to the door of the vehicle, and power supply to the function units including the camera and condition determination unit is started early through the power supply control unit to make those units active.

### Effect of Invention

An onboard camera may be applied to multiple uses with low cost without providing any mechanism that might increase the weight of a vehicle.

### BRIED DESCRIPTION OF DRAWINGS

Fig. 1 is a schematic diaphragm showing an example of a multi-function camera system;
Fig. 2 is a perspective view showing an example of a mounting position of a camera;
Fig. 3 is an illustrative view showing an example of a camera shooting range;
Fig. 4 is a flowchart showing an example of an operation of the multi-function camera system when the user rides on a vehicle;
Fig. 5 is a flowchart showing an example of an operation of a blind-spot monitor unit;
Fig. 6 is a flowchart of an example of an operation of an obstacle detection unit;
Fig. 7 is a flowchart showing an operation of the multi-function camera system when the user alights from the vehicle;
Fig. 8 is an illustrative view showing the relationship between the operation of the multi-function camera system and the shooting range; and
Fig. 9 is another illustrative view showing the relationship between the operation of the multi-function camera system and the shooting range.

### MODE FOR CARRYING OUT INVENTION

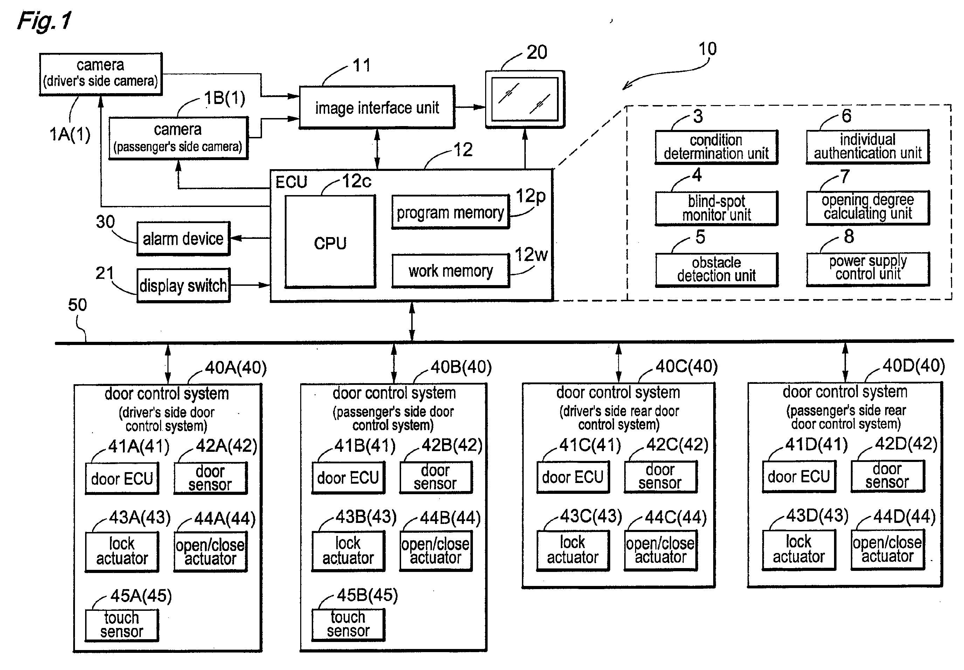

A preferred embodiment of the present invention will be described hereinafter in reference to the accompanying drawings. As shown in Figs. 1 to 3, a multi-function camera system 10 is fixed to a door handle 61 on a side surface of a vehicle 100, and includes a camera 1 for photographing a side area of the vehicle 100. The camera 1 is fixed to the door handle 61, which is one of vehicle components, in the current embodiment, but may naturally be fixed to any other vehicle component. For instance, such a vehicle component includes a door panel of a door 60, a side view mirror or a fender. Even when the camera 1 is fixed to the door handle 61 as in the current embodiment, it may be mounted either on a handle body 61 a or a handle cap 61 b.

According to the current embodiment, the vehicle 100 has four doors 60 on its sides. More particularly, the vehicle 100 has a driver's side door 60A, a passenger's side door 60B, a driver's side rear door 60C, and a passenger's side rear door 60D. Although the form of each door 60 is not limited to the one shown in the current embodiment, the driver's side door 60A and passenger's side door 60B are swingable doors each pivotable about an axis defined forwardly of the vehicle 100 in the current embodiment. On the other hand, the driver's side rear door 60C and the passenger's side rear door 60D are sliding doors.

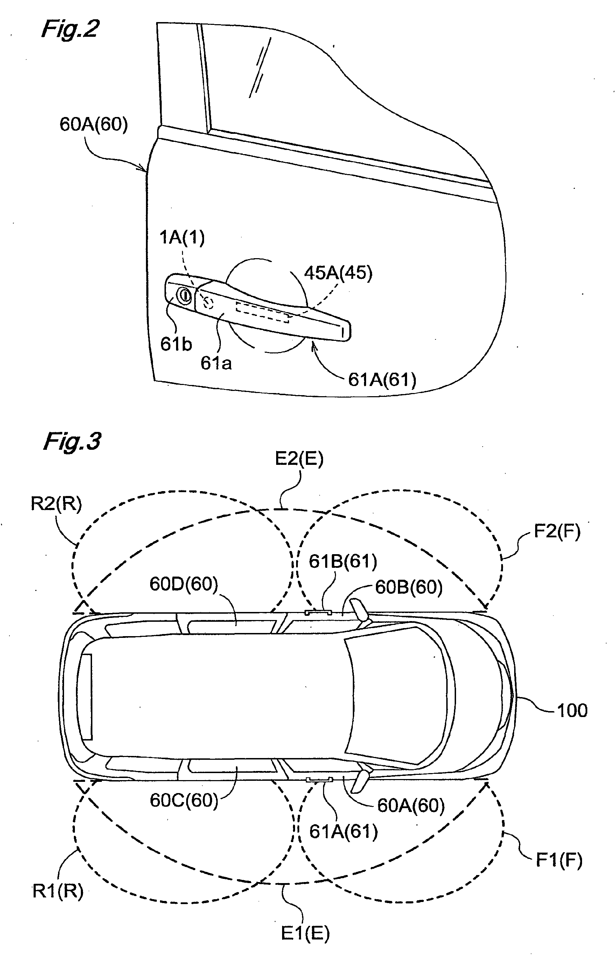

The camera 1 is provided in each of the driver's side door 60A and passenger's side door 60B. Naturally, the number of cameras to be provided is not limited to two, but three or more cameras in total may be mounted on the vehicle 100 including the one mounted on the rear door 60C or 60D. In the current embodiment, the camera 1A is mounted with its optical axis being fixed to the door handle 61A of the driver's side door 60A, while the camera 1B is mounted with its optical axis being fixed to the door handle 61 B of the passenger's side door 60B. The camera 1 is a wide-angle camera with a view angle of approximately 180 degrees, and is favorably provided with an angle of depression of approximately 5 to 10 degrees. The camera 1 has a shooting range up to a level of approximately 2 meters from the ground in the vicinity of the door 60 regardless of the angle of depression so as to photograph the head of a person standing by the side of the door 60. Further, the camera 1 is a digital camera for digitally capturing moving images of 15 to 60 frames per second. As shown in Fig. 3, the shooting range E of the camera 1 includes the side area, forward side-end area and rearward side-end area of the vehicle 100. While a detailed description will follow, the shooting range E includes a forward shooting range F and a rearward shooting range R. When the shooting range E needs to be distinguished between the camera 1A and the camera 1B, the shooting range of the camera 1A is marked as E1, the forward shooting range thereof is marked as F1 and the rearward shooting range thereof is marked as R1. Similarly, the shooting range of the camera 1B is marked as E2, the forward shooting range thereof is marked as F2 and the rearward shooting range thereof is marked as R2.

As shown in Fig. 1, the multi-function camera system 10 includes a plurality of function units such as a condition determination unit 3, a blind-spot monitor unit 4, an obstacle detection unit 5 and an individual authentication unit 6. The function units used in the present invention represent sections constituting the multi-function camera system 10, and include the camera 1 per se in a broad sense. Each of the blind-spot monitor unit 4, obstacle detection unit 5 and individual authentication unit 6 is configured to achieve "each use" when the camera 1 is applied to various uses, and is termed "a use function unit" when distinctively indicated. While only the blind-spot monitor unit 4, obstacle detection unit 5 and individual authentication unit 6 are introduced in the current embodiment, any use function unit for achieving any other use may naturally be included in the multi-function camera unit 10. For example, a parking assistance unit for guiding the driver in parking the vehicle 100 may be included in the multi-function camera system 10. On the other hand, it is sufficient that the multi-function camera system 10 for applying the camera 1 to various uses includes at least two use function units, and thus may include only the obstacle detecting unit 5 and the individual authentication unit 6 as the use function units, for example.

The blind-spot monitor unit 4 is a function unit for outputting an image captured by the camera 1 including a scene of the shooting range E to a display unit 20 provided in the interior of the vehicle. The captured image includes a sight falling in the driver's blind spot. The driver's blind spot is represented by a side of the fender or a lower side of the fender or the door 60, for example. The display unit 20 is a monitor device such as a liquid crystal display provided in the interior of the vehicle. While the display unit 20 may be for exclusive use for the blind-spot monitor unit 4, an information display unit of a car audio system or a display unit of a car navigation system may be used as well.

The obstacle detection unit 5 is a function unit configured to detect an object present around the vehicle 100 or a moving object approaching the vehicle 100 as an obstacle through image recognition based on the captured image. Here, the object is represented by a curb and pole, for example, and the moving object is represented by a pedestrian, bicycle, motorcycle and automobile, for example. The image recognition of a still object or moving object is performed through any known image processing technique.

The individual authentication unit 6 is a function unit configured to ascertain, through the image recognition based on the captured image, whether or not a person having reached the vehicle 100 matches with a user who has been registered at the system of the vehicle 100 beforehand. The authentication is performed by any known technique including face recognition, iris recognition, fingerprint recognition or vein recognition, for example.

Each of the blind-spot monitor unit 4, obstacle detection unit 5 and individual authentication unit 6 performs each function based on a result obtained from the condition determination unit 3 for determining an execution condition for each function unit. The condition determination unit 3 determines that the execution condition for the blind-spot monitor unit 4 is established when one of the users including the driver in the vehicle 100 gives an instruction to display the captured image. Here, the instruction from the user is given by operating a display switch 21 (see Fig. 1) provided in the interior of the vehicle, for example. The display switch 21 may be for exclusive use or may be incorporated in a touch screen of the display unit 20, if any. The instruction given through the display switch 21 also includes an instruction to select either the image captured by the camera 1A or the image captured by the camera 1B, an instruction to display both images captured by the camera 1A and the camera 1B, or an instruction to enlarge part of the captured image, for example.

Further, the condition determination unit 3 determines that the execution condition for the blind-spot monitor unit 4 is established when an obstacle is detected by the obstacle detection unit 5. The obstacle detection unit 5 generates a demand for display of the captured image when the obstacle is detected. The condition determination unit 3 determines that the execution condition for the blind-spot monitor unit 4 is established based on the demand for display. The driver may promptly confirm the detection result from the obstacle detection unit 5 including the authenticity of the result by viewing the captured image.

Also, the condition determination unit 3 determines that the execution condition for the obstacle detection unit 5 is established when the vehicle 100 is traveling including making a short stop. More particularly, when a main power supply for the vehicle 100 is active as when an ignition switch is on, the condition determination unit 3 determines that the execution condition for the obstacle detection unit 5 is established based on an ignition signal or the like. A hybrid vehicle with an internal combustion engine and a motor acting as a drive power source or an electric vehicle with a motor acting as the drive power source may not have the ignition switch for starting the internal combustion engine. However, even those vehicles have the main power supply (main switch) for making the drive power source of the vehicle active. Thus, when the main power supply is in action and the vehicle 100 is ready for traveling with an accelerating operation or a brake releasing operation, the condition determination unit 3 determines that the vehicle 100 is traveling including making a short stop and that the execution condition for the obstacle detection unit 5 is established. On the other hand, even when the main power supply is not active and the vehicle 100 is not ready for traveling, the condition determination unit 3 determines that the execution condition for the obstacle detection unit 5 is established if the vehicle 100 is stopped and unlocked. An example of such a situation is a condition when the user is alighting from the vehicle with the main power supply being cut off.

Also, the condition determination unit 3 determines that the execution condition for the individual authentication unit 6 is established when the vehicle 100 is not traveling but stopped and locked. When the vehicle 100 is not traveling, the main power source is not active as noted above, which hinders the vehicle 100 from traveling even with the accelerating operation or the brake releasing operation. When the vehicle 100 is stopped and locked or parked in this state, the condition determination unit 3 determines that the execution condition for the individual authentication unit 6 is established.

Further, the condition determination unit 3 determines a preferential condition as to which of image recognition of the forward side area corresponding to the shooting range F of the vehicle 100 and image recognition of the rearward side area corresponding to the shooting area R of the vehicle 100 should be preferentially performed. Although described in detail later, the obstacle detection unit 5 preferentially executes the image recognition either of the forward side area F and the rearward side area R based on the determination result for the preferential condition from the condition determination unit 3. As noted above, the vehicle 100 includes the swingable doors (door 60A and 60B) pivotable about the axis defined forwardly of the vehicle 100 in the current embodiment. The condition determination unit 3 determines the preferential condition in response to an opening degree of the swingable door 60A or 60B. More particularly, when the opening degree of the swingable door 60A or 60B is less than a predetermined opening degree (preferential threshold value), it is determined that preference is given to the image recognition of the forward side area F. On the other hand, when the opening degree of the swingable door 60A or 60B is the predetermined opening degree (preferential threshold value) or greater, it is determined that preference is given to the image recognition of the rearward side area R.

As noted above, the cameras 1A and 1B are mounted on the swingable doors 60A and 60B, respectively. More specifically, they are mounted on the door handles 61A and 61B that are the vehicle components provided in the swingable doors 60A and 60B. Thus, the camera 1 (1A or 1B) with its optical axis being fixed to the door is moved in response to pivotal movement of the swingable door 60 (60A or 60B), and the captured image changes along with the movement of the camera 1. On the other hand, since the vehicle is still, positions of part of the vehicle body and vehicle components other than the swingable door 60 and the door handle 61 (61A or 61 B) are moved within the captured image. Here, the multi-function camera system 10 in the current embodiment further includes an opening degree calculation unit 7 for calculating the opening degree of the swingable door 60 by image processing based on the captured image.

The opening degree calculation unit 7 calculates the opening degree of the swingable door based on an amount of relative movement (amount of variance) of the positions of part of the vehicle body and the vehicle components other than the door 60 and the door handle 61 moving within the captured image along with the movement of the camera 1. Here, the part of the vehicle body and the vehicle components other than the door 60 and the door handle 61 correspond to a bumper, tire, wheel, and a gap or end portion of an outer panel of the vehicle body, for example. Although it is naturally possible to provide a separate sensor in the swingable door 60 to detect the opening degree, the opening degree calculation unit 7 is configured to calculate the opening degree of the swingable door 60 based on the image processing, which can dispense with such a sensor and reduce the manufacturing cost.

The function units of the multi-function camera system 10, specifically, the camera 1, condition determination unit 3, blind-spot monitor unit 4, obstacle detection unit 5, individual authentication unit 6 and opening degree calculation unit 7 are configured to function with power being supplied when the main power supply of the vehicle 100 is active. In the individual authentication unit 6, for example, the execution condition is established when the vehicle 100 is not traveling, but stopped and locked. However, when the main power supply is not active and there is no power supply, the individual authentication unit 6 is not capable of achieving any function. Similarly, in the obstacle detection unit 5, the execution condition is established when the vehicle 100 is stopped and unlocked even when the main power supply is cut off and the vehicle is not ready for running. However, any function cannot be achieved since there is no power supply. Further, the condition determination unit 3 for determining the execution condition cannot receive power supply when the main power is not active, and is prevented from making determination.

In view of the above, the multi-function camera system 10 is provided with a power supply control unit 8 for supplying power to a predetermined function unit under a predetermined condition even when the main power supply of the vehicle 100 is not active. The power supply control unit 8 is designed to function properly regardless of whether or not the main power supply of the vehicle 100 is active, and is also designed to activate at least one of the function units in response to an operation relative to the door 60 even when the main power supply of the vehicle 100 is not active. More particularly, the power supply control unit 8 is configured to allow at least one of the camera 1, condition determination unit 3 and respective use function units to function. In the current embodiment, the power supply control unit 8 is configured to allow at least one of the camera 1, condition determination unit 3, blind-spot monitor unit 4, obstacle detection unit 5 and individual authentication unit 6 to function. Here, the "operation relative to the door 60" means a state in which the person having reached the vehicle 100 touches the door handle 61 mounted on the outside of the vehicle, for example. Alternatively, the "operation relative to the door 60" means a state in which the user including the driver of the vehicle 100 touches a door handle provided in the interior of the vehicle. The "operation relative to the door 60" will be described later using more specific examples.

Each of the function units of the multi-function camera system 10, in particular, the use function units such as the blind-spot monitor unit 4, obstacle detection unit 5 and individual authentication unit 6 may be provided as separate devices. In the current embodiment, however, they are incorporated into an ECU (electronic control unit) 12 having a microcomputer (CPU) 12c and acting as a core. More specifically, each of the function units achieves its function by hardware having the microcomputer (CPU) 12c as the core in cooperation with software stored in a program memory 12p. The image captured by the camera 1 is inputted to the ECU 12 through an image interface unit 11. The ECU 12 has a work memory 12w and configured to store the captured image or other temporary data and perform arithmetic processing such as image processing properly. Naturally, the CPU 12c, program memory 12p and work memory 12w may be integrated as a single processor. The ECU 12 is also linked to an alarm device 30 such as a buzzer and the display unit 20.

The ECU 12 is also linked to any other ECU through an in-vehicle network 50 such as CAN (controller area network). In the current embodiment, the ECU 12 is linked to door control systems 40 for controlling the four doors 60 through the in-vehicle network 50. The four door control systems 40 include a driver's side door control system 40A, passenger's side door control system 40B, driver's side rear door control system 40C and passenger's side rear door control system 40D. Each of the four door control systems 40 is provided with a door ECU 41 (41A, 41 B, 41C, 41D) acting as a core of the system, door sensor 42 (42A, 42B, 42C, 42D9 for detecting whether or not the door is open, for example, lock actuator 43 (43A, 43B, 43C, 43D) for electrically locking or unlocking the door, and open/close actuator 44 (44A, 44B, 44C, 44D) for electrically opening and closing the door. In the current embodiment, the ECU 12 is linked to the door control systems 40 through the in-vehicle network 50. Naturally, the ECU 12 may be connected to each of the door control systems 40 through a dedicated line.

The door ECU 41 is formed having a microcomputer acting as a core in the same manner as the ECU 12 of the multi-function camera system 10. The door sensor 42 may be a door switch for simply detecting whether the door 60 is connected to or disconnected from the vehicle body. Further, it may be a sensor for detecting the opening degree of the swingable door 60A or 60B, or may be a sensor for detecting whether or not a door handle (door knob) provided in the interior of the vehicle is operated. The lock actuator 43 may be a solenoid, for example, for locking and unlocking the door 60 by control of the door ECU 41. The open/close actuator 44 may be a motor, for example. When the doors 60C and 60D acting as the rear doors are sliding doors, the open/close actuator 44 functions to open and close the doors 60C and 60D between a full-opened state and a tight-closed state by control of the door ECU 41. When the door is a swingable door such as the driver's side door 60A or passenger's side door 60B, the open/close actuator 44 may be designed to open and close the door within a limited range between the tight-closed state and a partly-opened state, for example, instead of opening and closing the door between the full-opened state and the tight-closed state. Further, the open/close actuator 44 may not be limited to the mechanism for automatic opening and closing operation, but may be used for controlling manual opening and closing operation.

Each of the driver's side door control system 40A and passenger's side door control system 40B further includes a touch sensor 45 (45A, 45B) provided in the outside of the vehicle. The touch sensor 45 may be a capacitance sensor, for example, and is built in a side of the door handle 61 facing the door 60 as shown in Fig. 2. Although the driver's side door 60A is shown in Fig. 2, the passenger's side door 60B is constructed in the same manner. The touch sensor 45 detects that a hand of the user touches the door handle 61 when he or she opens the door 60. It is preferable that weak electric power or intermittent electric power is constantly supplied to the touch sensor 45 regardless of whether or not the main power supply of the vehicle 100 is active. The arrangement of the touch sensor 45 is not limited to the current embodiment. A switch may be provided in a side of the door handle 61 facing away from the door 60 to detect whether or not the user operates the switch.

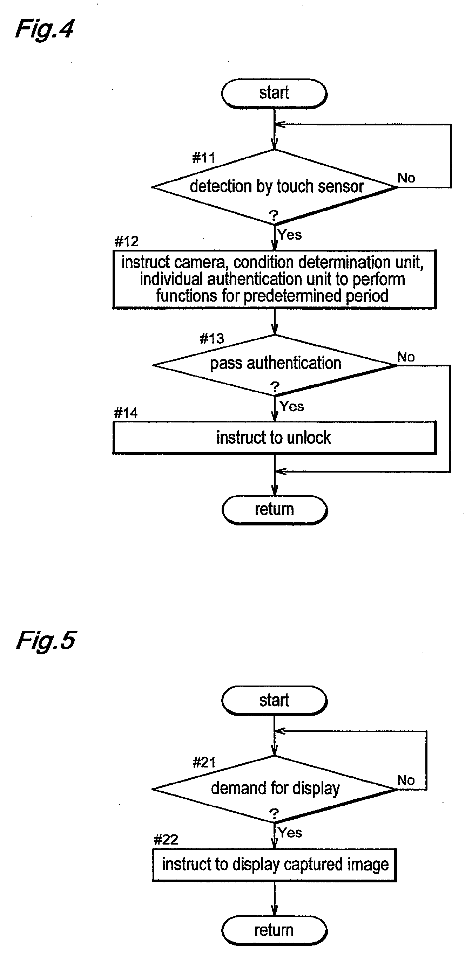

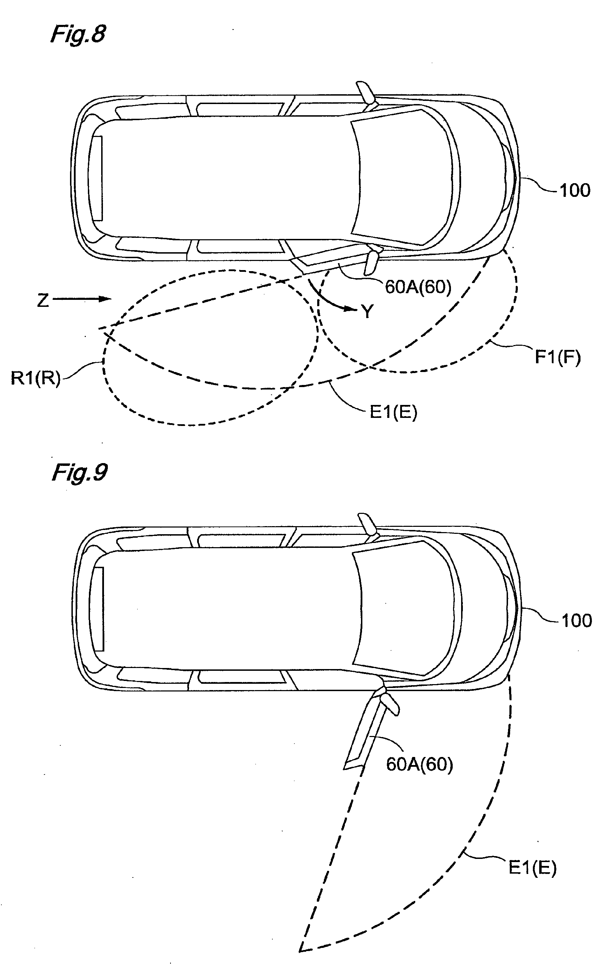

The multi-function camera system 10 achieves various functions in various situations in cooperation with the equipment provided in the vehicle 100 as noted above. The operation of the multi-function camera system 10 in the various situations will be described hereinafter in reference to flowcharts shown in Figs. 4 to 7 and illustrative representations shown in Figs. 8 and 9.

An example of the operation of the multi-function camera system 10 when the user rides on the vehicle will be described first in reference to Fig. 4. The vehicle 100 is locked and stopped, not in a traveling state. As noted above, weak electric power or intermittent electric power is constantly supplied to the touch sensor 45 as noted above. Therefore, it is possible to detect an operation relative to the door handle 61 by the user regardless of whether or not the main power supply for the vehicle 100 is active. A detected result from the touch sensor 45 is transmitted to the ECU 12 through the in-vehicle network 50.

Here, it is preferable that the CPU 12c of the ECU 12 accepts the detected result from the touch sensor 45 as an interrupt. The CPU 12c is restarted (waked up) by accepting the detected result from the touch sensor 45 even if it is temporarily shut off in a saving mode. The acceptance of the interrupt or restart of the CPU 12c are executed primarily by the power supply control unit 8. The power supply control unit 8 instructs the camera 1, condition determination unit 3 and individual authentication unit 6 to perform the functions for a predetermined period of time when it determines that there is detection by the touch sensor 45 (#11, #12). It would be power-saving if the power supply control unit 8 activates only the camera 1A when the detected result from the touch sensor 45A of the driver's side door 60A is received and activates only the camera 1B when the detected result form the touch sensor 45B of the passenger's side door 60B is received. Further, good security is provided since inadvertent authentication can be avoided by not executing any individual authentication on the side in which the touch sensor 45 does not detect the operation by the user.

The condition determination unit 3 that has been started up determines that the execution condition for the individual authentication unit 6 is established since the vehicle 100 is not traveling, but stopped and locked. With the execution condition being established, the individual authentication unit 6 recognizes the captured image to ascertain whether or not the person in the captured image matches the user who has been registered at the vehicle 100 in advance. When the authentication result is positive, an unlocking instruction is transmitted form the ECU 12 to the door control system 40 (40A to 40D) (#13 and #14). The ECU 12 completes the process after transmitting the unlocking instruction. Each lock actuator 43 (43A to 43D) is controlled by each door ECU 41 (41 A to 41 D) of the door control system 40 to unlock the vehicle 100. When the authentication result is negative, the ECU 12 completes the process.

The camera 1, condition determination unit 3 and individual authentication unit 6 fall into the temporary shutoff state again due to the power-saving mode after having performed the executions for the predetermined period of time through the power supply control unit 8 and after the lapse of a predetermined period of time. If electric power is supplied to the camera 1 when the individual authentication is unsuccessful, power may be wasted. Also, even when the individual authentication is successful and the user opens the door 60 to get into the vehicle, the main power supply is not necessarily immediately activated to start the vehicle 100. Thus, the temporary shutoff state is preferably established again by the effect of the power-saving mode once the individual authentication is completed regardless of whether the results are positive or negative. In the current embodiment, each unit performs the function for the "predetermined period of time," which is not limitative. Instead, each unit may remain in normal operation continuously and return to the temporary shutoff state when triggered by any other event in which the individual authentication is unsuccessful, or the individual authentication is successful and the door 60 is opened, for example.

Next, an example of the operation of the blind-spot monitor unit 4 will be described in reference to Fig. 5. Here, it is presumed that the main power supply of the vehicle 100 is active, that is to say, the vehicle 100 is traveling including making a short stop. Each of the units such as the camera 1 and ECU 12 of the multi-function camera system 10 is not in the temporary shutoff state, but in a normal operative state. The condition determination unit 3 determines whether or not there is any demand for display (#21), and instructs the blind-spot monitor unit 4 to display the captured image (#22) if there is a demand for display. The blind-spot monitor unit 4 instructs the image interface unit 11 and the display unit 20 to display the captured image, as a result of which the captured image is displayed on the display unit 20. It should be noted that the instruction to display the capture image includes an instruction to select either of the image captured by the camera 1A and the image captured by the camera 1B, an instruction to display both of them, and an instruction to enlarge part of the captured image.

The condition determination unit 3 determines that the execution condition for the blind-spot monitor unit 4 is established when an obstacle is recognized by the obstacle detection unit 5. The condition determination unit 3 also determines that the execution condition for the blind-spot monitor unit 4 is established when an instruction to display the captured image is given such as when the display switch 21 is operated by the user of the vehicle 100 including the driver. For example, if the power supply control unit 8 is designed to restart the ECU 12 when the display switch 21 is operated, it is possible to allow the blind-spot monitor unit 4 to perform the function according to the steps shown in Fig. 4 even when the main power supply for the vehicle 100 is not active.

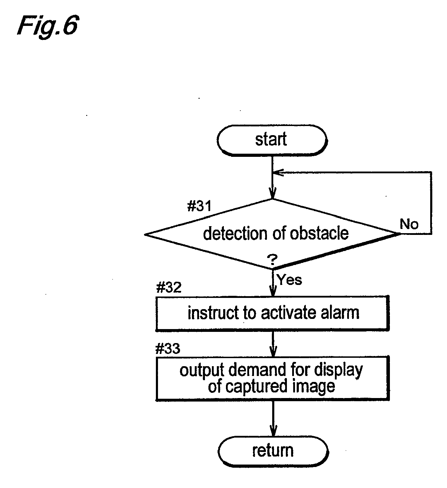

Nest, an example of the operation of the obstacle detection unit 5 will be described in reference to Fig. 6. Here, it is presumed that the main power supply for the vehicle 100 is active, or the unit is in operation with electric power being supplied for the predetermined period of time and with the main power supply being not active, as noted above. The condition determination unit 3 determines that the execution condition for the obstacle detection unit 5 is established when the vehicle 100 is traveling including making a short stop. The obstacle detection unit 5 detects the presence or approach of the obstacle in the captured image based on a difference between the respective frames (captured images) or the known image recognition technique including pattern matching performed within a single frame. When the obstacle is detected, the obstacle detection unit 5 instructs the alarm device 30 such as a buzzer to generate an alarm (#32). Further, it demands the blind-spot monitor unit 4 to display the captured image (#33). In this, an additional instruction may be given to enlarge the forward side area F or the rearward side area R depending on the position of the detected obstacle. The blind-spot monitor unit 4 allows the display unit 20 to display the enlarged captured image in cooperation with the image interface unit 11. The operation of the blind-spot monitor unit 4 having received the demand for display of the captured image was described above in reference to Fig. 5.

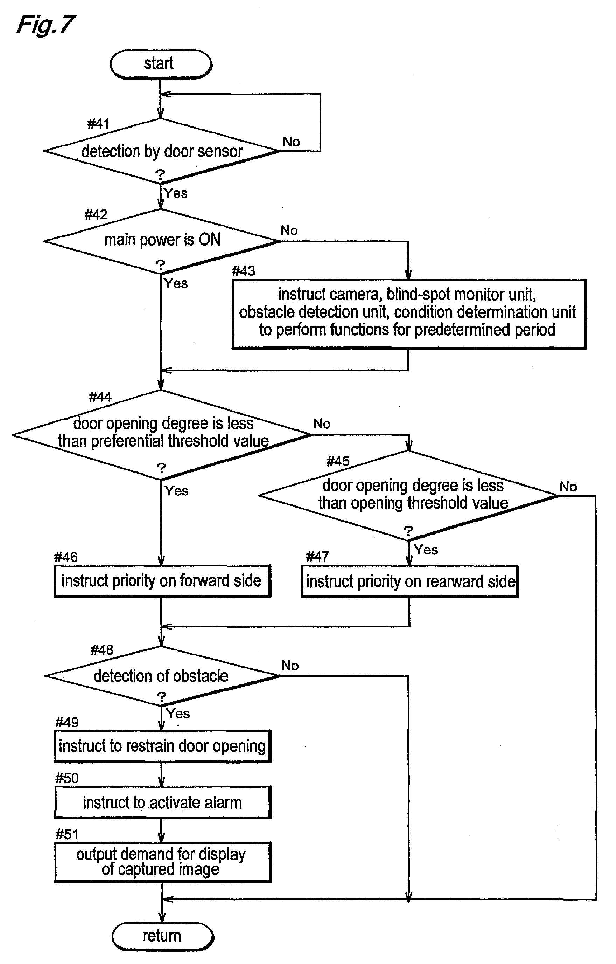

As described above, the condition determination unit 3 determines that the execution condition for the obstacle detection unit 5 is established when the vehicle 100 is stopped and unlocked even when the main power supply is not active and the vehicle 100 is not ready for traveling. This state corresponds to a situation in which the user is about to alight from the vehicle with the main power supply being cut off, for example. An example of the operation of the multi-function camera system when the user is alighting from the vehicle will be described hereinafter in reference to Fig. 7.

Firstly, it is determined by the power supply control unit 8 whether or not there is any detection by the door sensor 42 (#41). As noted above, the door sensor 42 may be the door switch for simply detecting whether the door 60 is connected to or disconnected from the vehicle body, or the sensor for detecting whether or not the door handle (door knob) provided in the interior of the vehicle is operated. For example, the detection of the operation may be the detection that the user including the driver touches the door handle (door knob) provided in the interior of the vehicle.

In other words, the door sensor 42 may be any detecting means for detecting that the user is about to get out of the vehicle preferably before the door 60 starts to open. When there is detection by the door sensor 42 that the user is about to get off the vehicle, the power supply control unit 8 next determines whether or not the main power supply is active (#42). When the main power supply is not active, the power supply control unit 8 instructs at least one of the camera 1, condition determination unit 3, blind-spot monitor unit 4 and obstacle detection unit 5 to perform the function for the predetermined period of time (#43). That is to say, the power supply control unit 8 allows the CPU 12c that has been falling in the temporary shutoff state to start up in the same manner as described in reference to the individual authentication unit 6. The predetermined period of time may be or may not be the same period of time as the period in which the individual authentication unit 6 functions. In the current embodiment, the unit performs the function for the "predetermined period of time," which is not limitative. Instead, the unit may remain in normal operation continuously after the CPU 12c is started up and return to the temporary shutoff state when triggered by any other event in which the door 60 is closed or the door 60 is locked, for example.

It is preferable to design the system for allowing the camera having the door sensor 42 that has detected that the user is about to alight from the vehicle to start up from the temporary shutoff state in order to save electric power. For example, when the detection is made by the door sensor 42A provided in the driver's side door 60A or the door sensor 42C provided in the driver's side rear door 60C, the camera 1A mounted on the driver's side door 60A is activated. On the other hand, when the detection is made by the door sensor 42B provided in the passenger's side door 60B or the door sensor 42D provided in the passenger's side rear door 60D, the camera 1B mounted on the passenger's side door 60B is activated.

In the above description, it is presumed that the user is alighting from the vehicle with the main power supply being cut off. Instead, the user may temporarily leave the vehicle with the main power supply being active, that is, with the vehicle 100 making a short stop. In that case, the condition determination unit 3 or obstacle detection unit 5, instead of the power supply control unit 8, may determine whether or not there is detection made by the door sensor 42 at the step #41. This is because the condition determination unit 3 determines that the execution condition for the obstacle detection unit 5 is established when the main power supply is active and thus the condition determination unit 3 and the obstacle detection unit 5 have already been in operation as well. Since it is virtually sufficient that the interrupt accepting function of the CPU 12 accepts the detected result from the door sensor 42, it is not required to strictly limit the function unit for performing the determination step #41 to any one of the function units. The process may be performed by two or more of the function units as necessary depending on the progress of the program.

The description will continue hereinafter, assuming that the user who is about to alight from the vehicle uses the swingable door, that is, the driver's side door 60A or the passenger's side door 60B. The condition determination unit 3 determines whether or not the opening degree of the door 60 is less than the preferential threshold value (#44). More particularly, it determines whether or not the opening degree of the door 60A (or 60B) is less than the preferential threshold value representing the predetermined opening degree. When the opening degree of the door 60A is small, the door 60A will be opened further in a direction Y in Fig. 8 in order for the user to alight from the vehicle. In that time, if there is any obstacle such as a curb in the vicinity of the door 60A, the door 60A may come into contact with the obstacle. Thus, the condition determination unit 3 determines the preferential condition depending on the opening degree of the door 60A (or 60B) to place priority to the image recognition of the forward side area F of the shooting area E (#44, #46).

On the other hand, when the opening degree of the door 60A (or 60B) is the preferential threshold value representing the predetermined opening degree or greater, the condition determination unit 3 determines the preferential condition depending on the opening degree of the door 60A (or 60B) to place priority to the image recognition of the rearward side area R of the shooting range E (#44, #47). This is because a moving object such as a pedestrian, bicycle or any other vehicle approaching from a direction Z (from behind the vehicle 100) in Fig. 8 may come into contact with the opened door 60A (or 60B), which requires to detect such a moving object. It should be noted that the obstacle detection becomes less significant when the opening degree of the door 60A (or 60B) is the predetermined threshold value or greater, as shown in Fig. 9. More particularly, the moving object approaching from behind the vehicle 100 does not fall in the shooting range E, as a result of which the vehicle 100 would be photographed at the forward side area F of the shooting range E. Thus, when the opening degree of the door 60A (or 60B) reaches the predetermined threshold value or becomes greater, the obstacle detection process is completed (#45).

The obstacle detection unit 5 generates a door-opening restraint instruction to the door control system 40 when the obstacle is detected (#48, #49). The door ECU 41 controls the open/close actuator 44 to restrain opening of the door 60. Further, the obstacle detection unit 5 instructs the alarm device 30 such as a buzzer to generate an alarm (#50), and outputs the demand for display of the captured image to the blind-spot monitor unit 4 (#51) as describe above in reference to Fig. 6. Meanwhile, the user may voluntarily give an instruction to the blind-spot monitor unit 4 to display the captured image on the display unit 20 in order to check whether or not there is a ditch or the like in the lateral side of the vehicle 100 when alighting from the vehicle, as described above in reference to Fig. 5.

In the above-described example, the user alights from the vehicle from the driver's side door 60A or the passenger's side door 60B that is the swingable door. It is preferable that the obstacle detection unit 5 similarly detects the obstacle when the user alights from the vehicle from the rear door 60C or 60D that is the sliding door. In that case, since a movable portion of the rear door 60C or 60D and an ingress/egress portion are present rearwardly of the camera 1, the determination based on the opening degree of the door is not necessary, and thus the entire shooting range E may be regarded as a range to be detected. Alternatively, the step #44 may be skipped to proceed to the steps #45 and #47 to give priority to detection in the rearward side area R. Which of the doors 60 is used is obvious from the door sensor 42 having outputted the detected result, the obstacle detection is possible for the door 60 in use.

In the above-noted embodiment, the camera 1 is mounted on the door handle 61 for facilitating understanding of the arrangement of the multi-function camera system 10 and its functions. Any person of ordinary skill in the art may design a similar multi-function camera system 10 with the camera 1 being mounted on a side view mirror. Such a modification also falls in the technical scope of the present invention. When the camera 1 is mounted to the side view mirror, the shooting range E varies between a using position and a folded position of the mirror. Nonetheless, the multi-function camera system 10 for performing multiple functions may be achieved by allowing the system to detect the position of the side view mirror and perform the image processing using the captured image associated with the detected position of the side view mirror. The position of the side view mirror may also be detected by recognizing the position of the vehicle 100 in the captured image based on the image processing in the same manner as the opening degree calculating unit 7.

For example, when the camera 1 is mounted on the outermost side of the side view mirror in the using position with a view angle of 180 to 190 degrees, substantially the same shooting range E as in the case where the camera 1 is mounted on the door handle 61 can be secured. Further, even if the side view mirror is in the folded position, substantially the same shooting range E as in the case where the camera 1 is mounted on the door handle 61 can be secured in the area rearwardly of the side view mirror (rearward side area R). Therefore, the multi-function camera system 10 using the camera 1 fixed to the vehicle component so as not to change its position can be satisfactorily achieved, though part of the functions described in the above-noted embodiment is limited depending on the position of the side view mirror.

As described above, the present invention can achieve the technique for applying the onboard camera to various uses with low cost without providing any mechanism for possibly increasing the weight of the vehicle.

### INDUSTRIAL USABILITY

The present invention may be applied to a multi-function camera system for applying an onboard camera to multiple uses.

### DESCRIPTION OF REFERENCE SIGNS

- 1, 1A, 1B:: camera
- 3:: condition determination unit
- 4:: blind-spot monitor unit
- 5:: obstacle detection unit
- 6:: individual authentication unit
- 7:: opening degree calculating unit
- 8:: power supply control unit
- 10:: multi-function camera system
- 20:: display unit
- 60, 60A, 60B, 60C, 60D:: door (vehicle component)
- 60A, 60B: swingable door
- 61:: door handle (vehicle component)
- 100:: vehicle
- E, E1, E2:: shooting range
- F, F1, F2:: forward side area
- R, R1, R2:: rearward side area

## Claims

1. A multi-function camera system (10) comprising:
a camera (1, 1A, 1B) mountable to a vehicle component on a side of a vehicle (100) for photographing a side area of the vehicle (100);
a condition determination unit (3) for determining execution conditions of a plurality of function units;
an obstacle detection unit (5) acting as one of the function units to function based on a determination result from the condition determination unit (3) for detecting, through image recognition, an obstacle present in the vicinity of the vehicle (100) or approaching the vehicle (100) based on a captured image of the camera (1, 1A, 1B); and **characterized by**
an individual authentication unit (6) acting as one of the function units to function based on the determination result from the condition determination unit (3) for ascertaining, through the image recognition, whether or not a person having reached the vehicle (100) matches with a user who has been registered at the vehicle (100) beforehand based on the captured image of the camera (1, 1A, 1B).

2. The multi-function camera system (10) as claimed in claim 1, wherein the condition determination unit (3) determines that the execution condition for the obstacle detection unit (5) is established when the vehicle (100) is traveling including making a short stop, or stopped and unlocked, and determines that the execution condition for the individual authentication unit (6) is established when the vehicle (100) is not traveling but stopped and locked.

3. The multi-function camera system (10) as claimed in claim 1 or 2 comprises a blind-spot monitor unit (4) acting as one of the function units to function based on the determination result from the condition determination unit (3) for outputting an image captured by the camera (1, 1A, 1B) including a scene falling in the driver's blind spot to a display unit (20) provided in the interior of the vehicle (100), wherein the condition determination unit (3) determines that the execution condition for the blind-spot monitor unit (4) is established when the user of the vehicle (100) including the driver gives an instruction to display the captured image, or when the obstacle is detected by the obstacle detection unit (5).

4. The multi-function camera system (10) as claimed in any one of claims 1 to 3, wherein the condition determination unit (3) determines a preferential condition as to which of image recognition of a forward side area (F, F1, F2) of the vehicle (100) and image recognition of a rearward side area (R, R1, R2) of the vehicle should be preferentially performed, and wherein the obstacle detection unit (5) preferentially performs the image recognition of either of the forward side area (F, F1, F2) and the rearward side area (R, R1, R2) based on the determination result from the condition determination unit (3).

5. The multi-function camera system (10) as claimed in claim 4, wherein the vehicle (100) includes a swingable door (60A, 60B) pivotable about an axis defined forwardly of the vehicle (100), and wherein the condition determination unit (3) determines the preferential condition depending on an opening degree of the swingable door (60A, 60B) to give priority to the image recognition of the forward side area (F, F1, F2) when the opening degree of the swingable door (60A, 60B) is less than a predetermined opening degree and give priority to the image recognition of the rearward side area (R, R1, R2) when the opening degree of the swingable door (60A, 60B) is or greater than the predetermined opening degree.

6. The multi-function camera system (10) as claimed in claim 5 comprises an opening degree calculating unit (7) for calculating the opening degree of the swingable door (60A, 60B) based on the captured image of the camera (1, 1A, 1B), wherein the camera (1, 1A, 1B) is mounted on the swingable door (60A, 60B) or on the vehicle component provided in the swingable door (60A, 60B).

7. The multi-function camera system (10) as claimed in any one of claims 1 to 6, wherein the camera (1, 1A, 1B), condition determination unit (3) and plurality of function units are configured to function when a main power supply of the vehicle (100) is active, and wherein the multi-function camera system (10) further comprises a power supply control system (8) configured to function regardless whether or not the main power supply of the vehicle is active and to allow at least one of the camera (1, 1A, 1B), condition determination unit (3) and plurality of function units to function in response to an operation relative to a door (60, 60A, 60B, 60C, 60D) of the vehicle (100) even if the main power supply of the vehicle (100) is not active.

8. The multi-function camera system (10) as claimed in claim 7, wherein the operation relative to the door (60, 60A, 60B, 60C, 60D) of the vehicle (100) is a condition in which the person having reached the vehicle (100) touches a door handle (61) provided in the outside of the vehicle (100).

9. The multi-function camera system (10) as claimed in claim 7, wherein the operation relative to the door (60, 60A, 60B, 60C, 60D) of the vehicle (100) is a condition in which the user including the driver of the vehicle (100) touches a door handle (61) provided in the interior of the vehicle.

## Patentansprüche

1. Multifunktions-Kamerasystem (10) mit:
einer Kamera (1, 1A, 1B), die an einer Fahrzeugkomponente auf einer Seite eines Fahrzeugs (100) zum Ablichten eines Seitenbereichs des Fahrzeugs (100) montierbar ist,
einer Bedingungsbestimmungseinheit (3) zum Bestimmen von Ausführbedingungen einer Vielzahl von Funktionseinheiten,
einer Hindernis-Erfassungseinheit (5), die als eine der Funktionseinheiten agiert, um basierend auf einem Bestimmungsergebnis der Bedingungsbestimmungseinheit (3) zu arbeiten, um ein Hindernis, das sich in der Nähe des Fahrzeugs (100) befindet oder sich dem Fahrzeug (100) nähert, basierend auf einem aufgenommenen Bild der Kamera (1, 1A, 1B) mittels einer Bilderkennung zu erfassen, und
**gekennzeichnet durch**
eine Einzelpersonen-Authentifizierungs-Einheit (6), die als eine der Funktionseinheiten agiert, um basierend auf dem Bestimmungsergebnis der Bedingungsbestimmungseinheit (3) zu arbeiten, um basierend auf dem aufgenommenen Bild der Kamera (1, 1A, 1B) mittels der Bilderkennung festzustellen, ob oder ob nicht eine bei dem Fahrzeug (100) angekommene Person mit einem Benutzer übereinstimmt, der zuvor bei dem Fahrzeug (100) registriert wurde.

2. Multifunktions-Kamerasystem (10) gemäß Anspruch 1, wobei die Bedingungsbestimmungseinheit (3) bestimmt, dass die Ausführbedingung für die Hindernis-Erfassungseinheit (5) vorliegt, wenn sich das Fahrzeug (100) fortbewegt, einschließlich eines kurzen Anhaltens, oder wenn es angehalten und unverschlossen ist, und sie bestimmt, dass die Ausführbedingung für die Einzelpersonen-Authentifizierungs-Einheit (6) vorliegt, wenn sich das Fahrzeug (100) nicht fortbewegt, es aber angehalten und verschlossen ist.

3. Multifunktions-Kamerasystem (10) gemäß Anspruch 1 oder 2, mit einer Toter-Winkel-Überwachungs-Einheit (4), die als eine der Funktionseinheiten agiert, um basierend auf dem Bestimmungsergebnis der Bedingungsbestimmungseinheit (3) zu arbeiten, um ein durch die Kamera (1, 1A, 1B) aufgenommenes Bild, das eine in einen toten Winkel des Fahrers fallende Szene enthält, zu einer in dem Inneren des Fahrzeugs (100) angeordneten Anzeigeeinheit (20) auszugeben, wobei die Bedingungsbestimmungseinheit (3) bestimmt, dass die Ausführbedingung für die Toter-Winkel-Überwachungs-Einheit (4) vorliegt, wenn der Benutzer des Fahrzeugs (100), einschließlich des Fahrers, eine Anweisung erteilt das aufgenommene Bild anzuzeigen, oder wenn das Hindernis durch die Hindernis-Erfassungseinheit (5) erfasst ist.

4. Multifunktions-Kamerasystem (10) gemäß einem der Ansprüche 1 bis 3, wobei die Bedingungsbestimmungseinheit (3) eine Vorzugsbedingung bestimmt, hinsichtlich einer bevorzugten Ausführung einer Bilderkennung eines Vorderseiten-Bereichs (F, F1, F2) des Fahrzeugs (100) und einer Bilderkennung eines Rückseiten-Bereichs (R, R1, R2) des Fahrzeugs, und wobei die Hindernis-Erfassungseinheit (5) basierend auf dem Bestimmungsergebnis der Bedingungsbestimmungseinheit (3) die Bilderkennung entweder des Vorderseiten-Bereichs (F, F1, F2) oder des Rückseiten-Bereichs (R, R1, R2) bevorzugt durchführt.

5. Multifunktions-Kamerasystem (10) gemäß Anspruch 4, wobei das Fahrzeug (100) eine schwenkbare Tür (60A, 60B) aufweist, die um eine Achse drehbar ist, die vorderseitig an dem Fahrzeug (100) definiert ist, und wobei die Bedingungsbestimmungseinheit (3) die Vorzugsbedingung abhängig von einem Öffnungsgrad der schwenkbaren Tür (60A, 60B) bestimmt, um der Bilderkennung des Vorderseiten-Bereichs (F, F1, F2) Priorität zu geben, wenn der Öffnungsgrad der schwenkbaren Tür (60A, 60B) kleiner als ein vorbestimmter Öffnungsgrad ist, und um der Bilderkennung des Rückseiten-Bereichs (R, R1, R2) Priorität zu geben, wenn der Öffnungsgrad der schwenkbaren Tür (60A, 60B) gleich dem vorbestimmten Öffnungsgrad oder größer als der vorbestimmte Öffnungsgrad ist.

6. Multifunktions-Kamerasystem (10) gemäß Anspruch 5, mit einer Öffnungsgrad-Berechnungseinheit (7) zum Berechnen des Öffnungsgrads der schwenkbaren Tür (60A, 60B) basierend auf dem aufgenommenen Bild der Kamera (1, 1A, 1B), wobei die Kamera (1, 1A, 1B) an der schwenkbaren Tür (60A, 60B) oder an der in der schwenkbaren Tür (60A, 60B) angeordneten Fahrzeugkomponente montiert ist.

7. Multifunktions-Kamerasystem (10) gemäß einem der Ansprüche 1 bis 6, wobei die Kamera (1, 1A, 1B), Bedingungsbestimmungseinheit (3) und Vielzahl von Funktionseinheiten dazu eingerichtet sind, um zu arbeiten, wenn eine Hauptenergieversorgung des Fahrzeugs (100) aktiv ist, und wobei das Multifunktions-Kamerasystem (10) ferner ein Energieversorgungs-Steuersystem (8) umfasst, das dazu eingerichtet ist, um ungeachtet, ob oder ob nicht die Hauptenergieversorgung des Fahrzeugs aktiv ist, zu arbeiten, und um zuzulassen, dass zumindest eine aus der Kamera (1, 1A, 1B), Bedingungsbestimmungseinheit (3) und Vielzahl von Funktionseinheiten als Antwort auf einen Vorgang bezüglich einer Tür (60, 60A, 60B, 60C, 60D) des Fahrzeugs (100) arbeitet, auch wenn die Hauptenergieversorgung des Fahrzeugs (100) nicht aktiv ist.

8. Multifunktions-Kamerasystem (10) gemäß Anspruch 7, wobei der Vorgang bezüglich der Tür (60, 60A, 60B, 60C, 60D) des Fahrzeugs (100) ein Zustand ist, bei dem die bei dem Fahrzeug (100) angekommene Person einen an der Außenseite des Fahrzeugs (100) angeordneten Türgriff (61) berührt.

9. Multifunktions-Kamerasystem (10) gemäß Anspruch 7, wobei der Vorgang bezüglich der Tür (60, 60A, 60B, 60C, 60D) des Fahrzeugs (100) ein Zustand ist, bei dem der Benutzer, einschließlich des Fahrers des Fahrzeugs (100), einen in dem Inneren des Fahrzeugs angeordneten Türgriff (61) berührt.

## Revendications

1. Système de prise de vue multifonction (10) comprenant :
un appareil de prise de vue (1, 1A, 1B) pouvant se monter sur un composant de véhicule d'un côté d'un véhicule (100) pour photographier une zone latérale du véhicule (100) ;
une unité (3) de détermination de conditions destinée à déterminer des conditions d'exécution d'une pluralité d'unités fonctionnelles ;
une unité (5) de détection d'obstacle agissant comme l'une des unités fonctionnelles pour fonctionner en se basant sur un résultat de détermination provenant de l'unité (3) de détermination de conditions pour détecter, via une reconnaissance d'image, un obstacle présent au voisinage du véhicule (100) ou approchant le véhicule (100) en se basant sur une image acquise de l'appareil de prise de vue (1, 1A, 1B), et
**caractérisé par** une unité (6) d'authentification d'individu agissant comme l'une des unités fonctionnelles pour fonctionner en se basant sur le résultat de détermination provenant de l'unité (3) de détermination de conditions pour certifier, en se basant sur l'image acquise de l'appareil de prise de vue (1, 1A, 1B), via la reconnaissance d'image, si une personne ayant atteint le véhicule (100) correspond ou non à un utilisateur qui a été enregistré préalablement au niveau du véhicule (100).

2. Système de prise de vue multifonction (10) selon la revendication 1, dans lequel l'unité (3) de détermination de conditions détermine que la condition d'exécution pour l'unité (5) de détection d'obstacle est établie lorsque le véhicule (100) circule en incluant le fait de faire un arrêt bref, ou est arrêté et déverrouillé, et détermine que la condition d'exécution pour l'unité (6) d'authentification d'individu est établie lorsque le véhicule (100) ne circule pas mais est arrêté et verrouillé.

3. Système de prise de vue multifonction (10) selon la revendication 1 ou 2, comprenant une unité (4) de surveillance d'angle mort agissant comme l'une des unités fonctionnelles pour fonctionner en se basant sur le résultat de détermination provenant de l'unité (3) de détermination de conditions pour sortir une image acquise par l'appareil de prise de vue (1, 1A, 1B) incluant une scène tombant dans l'angle mort du conducteur vers une unité (20) d'affichage prévue à l'intérieur du véhicule (100), dans lequel l'unité (3) de détermination de conditions détermine que la condition d'exécution pour l'unité (4) de surveillance d'angle mort est établie lorsqu'un utilisateur du véhicule (100) y compris le conducteur donne une instruction pour afficher l'image acquise, ou lorsque l'obstacle est détecté par l'unité (5) de détection d'obstacle.

4. Système de prise de vue multifonction (10) selon l'une quelconque des revendications 1 à 3, dans lequel l'unité (3) de détermination de conditions détermine une condition préférentielle au sujet de celle d'une reconnaissance d'image d'une zone de côté avant (F, F1, F2) du véhicule (100) et d'une reconnaissance d'image d'une zone de côté arrière (R, R1, R2) du véhicule qui doit être effectuée de façon préférentielle, et dans lequel l'unité (5) de détection d'obstacle effectue de façon préférentielle la reconnaissance d'image de l'une ou l'autre de la zone de côté avant (F, F1, F2) et de la zone de côté arrière (R, R1, R2) en se basant sur le résultat de détermination provenant de l'unité (3) de détermination de conditions.

5. Système de prise de vue multifonction (10) selon la revendication 4, dans lequel le véhicule (100) inclut une porte battante (60A, 60B) pouvant pivoter autour d'un axe défini vers l'avant du véhicule (100), et dans lequel l'unité (3) de détermination de conditions détermine la condition préférentielle en fonction du degré d'ouverture de la porte battante (60A, 60B) pour donner la priorité à la reconnaissance d'image de la zone de côté avant (F, F1, F2) lorsque le degré d'ouverture de la porte battante (60A, 60B) est inférieur à un degré d'ouverture prédéterminé et pour donner la priorité à la reconnaissance d'image de la zone de côté arrière (R, R1, R2) lorsque le degré d'ouverture de la porte battante (60A, 60B) est égal ou supérieur au degré d'ouverture prédéterminé.

6. Système de prise de vue multifonction (10) selon la revendication 5, comprenant une unité (7) de calcul de degré d'ouverture destinée à calculer le degré d'ouverture de la porte battante (60A, 60B) en se basant sur l'image acquise de l'appareil de prise de vue (1, 1A, 1B), dans lequel l'appareil de prise de vue (1, 1A, 1B) est monté sur la porte battante (60A, 60B) ou sur un composant de véhicule disposé dans la porte battante (60A, 60B).

7. Système de prise de vue multifonction (10) selon l'une quelconque des revendications 1 à 6, dans lequel l'appareil de prise de vue (1, 1A, 1B), l'unité (3) de détermination de conditions et la pluralité d'unités fonctionnelles sont constitués pour fonctionner lorsque l'alimentation principale du véhicule (100) est active, et dans lequel le système de prise de vue multifonction (10) comprend en outre un système de commande d'alimentation (8) constitué pour fonctionner indépendamment de ce que l'alimentation principale du véhicule est ou non active, et pour permettre qu'au moins l'un de l'appareil de prise de vue (1, 1A, 1B), de l'unité (3) de détermination de conditions et de la pluralité d'unités fonctionnelles fonctionne en réponse à une opération relative à une porte (60, 60A, 60B, 60C, 60D) du véhicule (100) même si l'alimentation principale du véhicule (100) n'est pas active.

8. Système de prise de vue multifonction (10) selon la revendication 7, dans lequel l'opération relative à la porte (60, 60A, 60B, 60C, 60D) du véhicule (100) est une condition selon laquelle la personne ayant atteint le véhicule (100) touche une poignée de porte (61) disposée à l'extérieur du véhicule (100).

9. Système de prise de vue multifonction (10) selon la revendication 7, dans lequel l'opération relative à la porte (60, 60A, 60B, 60C, 60D) du véhicule (100) est une condition selon laquelle un utilisateur y compris le conducteur du véhicule (100) touche une poignée de porte (61) disposée à l'intérieur du véhicule (100).
